# EUROPEAN PATENT APPLICATION

(11) **EP 4 782 369 A1**
(43) Date of publication of application: **29.07.2026**
(21) Application number: 26153784.9
(22) Date of filing: 23.01.2026
(51) Int. Cl.: B65G 1/10, A47B 31/00, B62B 3/00, B62B 3/02, B65D 19/18, B65D 71/00, A47B 51/00

(54) **VERTICAL STORAGE SYSTEM WITH MOVABLE SECTION**

(30) Priority: 28.01.2025 SK 272025 U
(71) Applicant: DKM Autopack s. r. o., 905 01 Senica (SK)
(72) Inventor: Komacek, Dusan, 905 01 Senica (SK)
(74) Representative: Porubcan, Róbert

(57) **Abstract**

Inside the spatial structure there is at least one movable section (2) led vertically in a sliding guide. Between the movable section (2) and the spatial structure there is at least one elastic push element, which is adapted to push the movable section (2) upwards in its upper position and preferably also to push it downwards when the movable section (2) is in the lower position. The angle of inclination α of the elastic push element is less than 90°. The compartments are formed by sewing textile or other semi-rigid flat material. The compartments of the central zone are foldable to allow the movable section (2) to be moved to the central zone when empty, from where the parts are removed most easily and conveniently. The foldable compartments are preferably suspended from the upper movable section (2). The solution may also include a fork holder (13) for placing or hanging the parts.

## Description

### Field of technology

The invention concerns a vertical storage system that uses at least one vertically movable section to improve operator ergonomics, the movable section being mounted in sliding guides connected to the racking system frame. The invention is characterized by a simple and reliable construction with a small number of moving parts and provides excellent, ergonomic access to the stored or transported parts or components.

### State of the art

Vertical storage systems are used as flexible and safe devices for storing, transporting and issuing parts and components in a work or assembly area. Several types of racks (stands, compartments) and vertical storage systems are used in the automotive industry to transport parts and components to the production line and to remove them during assembly. In order to effectively use the available floor space, vertical storage systems are relatively high, usually more than 2 m high, where the upper section is adjustable in height to a lower position so that the worker can safely remove the part or component from the vertical storage system.

Utility model no. SK 7781 describes a vertical storage system, where the racks are height-adjustable in vertical frame guides, the upper rack is suspended on hinges that are connected to the winding drum (winch). The winding drum is rotatably mounted on the frame and kinematically connected to a manually controlled crank drive. The design is complicated and has many moving parts. The vertical storage system according to publication SK 9253 uses tensile elements to which weights are connected to reduce the control force. This requires space for the moving weights. These shortcomings are partially solved by publication of utility model no. CZ 35954, which describes a vertical storage system with a linear actuator with an electric drive. However, the design requires a source of electrical energy, for example in the form of a battery that needs to be charged and serviced. The floors of the vertical storage system are moved by the motor according to the document EP2796391A1, which increases the dead weight of the vertical storage system and the motor with the gear system occupies space inside the storage or protrudes from the groundplan of the storage.

Construction pursuant to publication JPS61206709 is suitable for carts in a warehouse with automated movement, it is not intended for manual removal of parts on an assembly line. Publication US6123208 illustrates a configurable supply cart, where the height of the upper floor is adjusted according to the dimensions of the parts when the production program changes, but not during regular storage and issuance of parts. Publication WO2015160260A1 describes a system with two winches that height-position a group of floors suspended from each other.

All known technical solutions are complicated or inconvenient for the operating personnel. A new solution for a vertical storage system is desirable, which will ensure safe and careful storage of parts or components on a small ground area and at the same time provide the possibility of positioning the height of the section with parts or components so that it is at a height that is ergonomically suitable for removing parts or components. A vertical storage system with a movable section can have a greater height and store more objects, while the movable section ensures that the objects are at a height accessible to the operator.

### Essence of the invention

The invention is defined in claims 1 to 15. The deficiencies in the prior art are remedied by a vertical storage system with a movable section, where the vertical storage system includes a spatial structure, inside which at least one movable section is guided for vertical movement between an upper and a lower position, the movable section being adapted to carry and/or store parts or components, according to the present invention, the essence of which lies in the fact that the movable section (compartment, partition) is connected to the spatial structure by at least one elastic (flexible) push element which pushes the movable section located in the upper position upwards.

The elastic push element is positioned and secured between the movable section and the frame of the spatial structure so that the angle of inclination α of the axis of the elastic push element from the horizontal plane in the upper position of the movable section is less than 90°, usually it will be less than 70°. The angle of inclination of the axis of the elastic push element in this document refers to the deviation of the output force vector from the normal line onto the course of movement of the movable section. Since the vertical storage system will usually stand on a horizontal floor and the movable section has a path essentially parallel to the uprights (stanchions) of the spatial structure, the angle of inclination is referred to the horizontal plane for clarity. An angle of inclination less than 90° leads to kinematics in which this angle of inclination decreases as the movable section moves downwards. The angle of inclination determines the vertical component of the force from the elastic push element, which is balanced by the weight of the movable section and the force with which the operator controls the upward or downward movement.

When the movable section is moved downwards, the angle of inclination decreases and thus the vertical component of the force of the elastic push element also decreases in accordance with sin(α). It is advantageous if the elastic push element pushes the movable section upwards if the movable section is in the upper position and pushes the movable section downwards if the movable section is in the lower position.

The kinematic coupling between the spatial structure and the movable section is known in the prior art, for example, it may include a vertically oriented sliding guide or a hinge or scissor mechanism and the like. An important feature of the present invention is the inclusion of an elastic push element in the force transmission of the weight between the movable section and the frame of the spatial structure. The elastic push element is oriented in such a way that it pushes the movable section upwards, when it transfers the weight of the movable section and the loaded parts or components to the spatial structure and subsequently to the floor, but after the movable section passes downwards through the dead position (α=0) the elastic push element pushes the movable section downwards. To achieve this goal, the elastic push element is connected to the spatial structure at its first end and to the movable section at its second end. When the movable section moves between the lower and upper positions, the axis of the elastic push element passes through a horizontal plane (α=0). This is ensured by the fact that the point of attachment of the elastic push element to the movable section in its upper position is located above the height of the attachment of the elastic push element to the spatial structure. When the movable section is in its lower position, the point of attachment of the elastic push element to the movable section is located below the height of the attachment of the elastic push element to the spatial structure. The dead position of the elastic push element, when the elastic push element does not push the movable section either up or down, corresponds to the state in which the point of attachment of the elastic push element to the movable section is located exactly at the height of the attachment of the elastic push element to the spatial structure. At the same time, in groundplan view, the first connection point is distanced from the second connection point by a distance that corresponds to or preferably is greater than the length of the elastic push element in its maximum compression state. This ensures passage through the dead position when the elastic push element is most compressed. Such a distance in groundplan view can be easily achieved by having the first connection point close to the upright of the spatial structure and the second connection point to the movable section further away from the upright, for example in the middle or on the opposite side of the movable section.

In a preferable arrangement, the inclination angle α ranges from 70° to -15°, also preferably from 65° to -10°, particularly preferably from 50° to -5°, where the first value corresponds to the upper position of the movable section and the second value corresponds to the lower position of the movable section. A negative value means the angle below the horizontal plane in which the first attachment point of the elastic push element lies. However, the functional range of inclination does not always have to go into negative values; it is sufficient if it approaches zero, for example within a range of 70° to 5°, when the vertical component from the elastic push element (sin 5° = 0.08715) is already very small and reliably outweighs the weight of the movable section. The result is a stable upper and stable lower position of the movable section, both in the empty and loaded state. The axis of the elastic push element in this document is considered to be the straight line in which the force vector derived by the elastic push element lies. In most cases, the elastic push element will be constructed such that its axis and force vector lie in the line connecting its first and second ends, by which it is connected to the spatial structure and to the movable section. Typically, the elastic push element will have a linear or approximately linear force characteristic, where the derived push force increases with increasing compression.

It is advantageous if the swinging (tilting) movement of the elastic push element when moving the movable section is carried out in a vertical plane, which is parallel to or coincides with one side wall of the spatial structure. In this document, the naming of the walls is chosen so that the front wall and possibly also the rear wall of the vertical storage system is intended for loading and unloading parts, which corresponds to the orientation of the compartments of the vertical storage system. The front and rear walls preferably have a greater width than the side walls. The side walls are perpendicular to the front and rear walls. There is no regular access to the compartments (shelves) in the racks from the side walls and the spatial structure here may include partitions and reinforcements necessary to achieve the desired stability of the vertical storage system.

The elastic push element keeps the movable section in the upper position even with loaded parts or components. The size of the push force of the elastic push element is selected according to the total weight of the movable section and the loaded parts or components and according to sin(α) for the angle of inclination in the upper position. The solution achieves the effect even with only one elastic push element, but at least two elastic push elements are preferably used, which are connected to the sides of the movable section, where they do not interfere with the loading and removal of parts or components. Here, they also use the free space, which is approximately determined by the width of the uprights of the spatial structure.

One or more pairs of elastic push elements provide a symmetrical or approximately symmetrical force action, thereby preventing the movable section from crossing or crossing over in the sliding guides. However, the use of one elastic push element is not excluded, whereby the element can be placed, for example, in the central vertical plane of the movable section, which is parallel to the side wall of the spatial structure. One realization in the examples describes an arrangement with one elastic push element, which is located in the middle of the movable section to achieve a symmetrical distribution of forces, whereby the movable section is divided into two segments. However, a more universal arrangement is one in which the elastic push elements are located on the sides of the movable section, where they suitably use the free space in the frame of the spatial structure. The elastic push element on the left side wall and the elastic push element on the right side wall can be oriented in the same direction, i.e. they can be parallel, or they can be connected against each other.

The elastic push element can be provided with a damping mechanism, for example it can have a friction brake, so that the extension or retraction of the elastic push element is slowed down and any sudden speed fluctuations are damped. Damped operation is also suitable as protection against accidents, as sudden displacements could be risky for personnel in the vicinity.

The advantage of the described construction is the controlled and gentle movement of the movable section with selves without shocks, simple manual lifting and lowering of the movable section even when fully loaded. In the upper position, the force from the elastic push element is counteracted by the weight of the movable section with loaded parts or components, and the operator overcomes only the difference between these forces at the beginning of the movement at the upper dead center. As the movable section gradually lowers, the component of the force of the elastic push element in the vertical direction decreases, thereby facilitating the downward movement. In the dead position, when the first connection point and the second connection point are at the same height (α=0), the entire force from the elastic push element is captured as a horizontal reaction in the sliding guide, then the uncompensated weight of the movable section with parts or components acts in the direction of downward movement. The transition of the movable section through the dead position is therefore smooth and without shocks. The term dead position therefore refers to the elastic push element which in this position has no vertical force component, but the movable section itself passes through this position completely smoothly. Subsequently, during further downward movement, the elastic push element acts in such a way that it pushes the movable section into the lower position. This is advantageous so that the movable section does not lift when parts or components are gradually removed. Even after the total weight is reduced, the movable section is held stably in its lower position. Since a smaller force of the elastic push element is sufficient to maintain the lower position than to maintain the upper position, it will usually be the case that the angle of inclination of the axis of the elastic push element downwards from the vertical plane in the lower position of the movable section is significantly smaller than the angle of inclination of the axis of the elastic push element upwards from the vertical plane in the upper position. This is simply ensured by the first attachment point of the elastic push element being at a height that is in the lower third of the path of the second point between the upper and lower positions. The smaller the inclination of the axis of the elastic push element from the vertical line, the greater the vertical component of the push force.

In order to simplify the adaptation of the kinematics to changes in the weight of the parts or components, for example when changing the production program, the elastic push element can have an adjustment element for changing the applied push force. This can be, for example, an element for adjusting the spring preload. In another embodiment, the push force can be adjusted by changing the distance between the first point and the second connection point, which also changes the resulting push force in the case of a linearly acting elastic element.

In another aspect, the invention uses multiple elastic push elements connected in one plane. For example, a pair of elastic push elements can be connected on both sides of the spatial frame to achieve a greater total push force. The connection of the elastic push elements can be different. The elastic push elements in a pair on one side can be connected parallel to each other or can be connected from opposite sides of the spatial structure, in which case the lateral forces transmitted to the sliding guide are eliminated. With the opposite symmetrical connection of a pair of elastic push elements, the horizontal forces from the elastic push elements are mutually balanced in the force reaction between the second connection points and the result of the joint action of the pair of elastic push elements is only a vertical component of the forces. Naturally, due to inaccuracies, this force balance does not have to be total.

The number of moving parts, compared to other solutions with weights, electric motors, crank winches, is limited only to the movable section itself and the elastic push element. The present invention is characterized by high reliability and durability with excellent personnel ergonomics.

The elastic push element can be formed by a mechanical telescopic rod with a spring or, preferably, it can be formed by a hydraulic strut or, particularly preferably, a pneumatic strut. Pneumatic struts represent an economically and structurally advantageous solution, since their mass use (including in the automotive industry itself) has led to a sophisticated and reliable design. The pneumatic strut is characterized by a relatively high push force and extensive scalability of force and dimensions. Not only are different lengths and differently set resulting push forces available, but there is also the possibility of changing the resulting force by changing the push (pressure) according to the current requirement. At the same time, the gas strut has a damping of the movement of the moving piston rod. This is advantageous for achieving a smooth, but not rapid movement of the movable section without shocks. The elastic push element can also be formed by an electropneumatic or electric strut, such as those used to open the fifth door of cars.

The described basic arrangement is advantageously used in a vertical storage system, which has at least the central part of the compartments designed as foldable, i.e. capable of being compressed in height or otherwise reduced in height without destruction, so that a movable section can enter this central part. This is ensured in the prior art solutions by the fact that the compartments are made of technical textile or a similar semi-rigid flat material. Technical textile, for example polyester, is light, highly wear-resistant and gentle on the stored parts or components. The vertical storage system contains a selectable number of segments and storage compartments, the size and shape of which is adapted for the purposes of the current requirements and the dimensions of the stored and transported objects. After the central part is emptied, the upper movable section can be lowered down, while the empty central part is folded on itself and the movable section is at a height suitable for removing parts or components.

Similarly to what is known from the prior art, textile compartments can be created by sewing and a group of partitions or compartments forms an insert which is connected to the peripheral frame on the upper side. The peripheral frame is connected to the spatial structure or it is attached to a sliding guide which is attached to the spatial structure. The insert is tensioned in the peripheral frame from which it hangs downwards. Preferably, the central part of the vertical storage system is intended for folding, which is height-wise optimal for inserting and removing parts or components. A strap may hang downwards from the peripheral frame for pulling the movable section downwards. The peripheral frame of the upper movable section is in the upper position at a height in which it is difficult to access, cannot be easily reached by hand and therefore it is appropriate to use a strap, a pull rod or similar means of sufficient length. The strap is usable for pulling downwards and, in the opposite movement of the movable section upwards, it can be used to hold or slow down the movement, when the elastic push element lifts the movable section to the upper extreme position.

In another arrangement, the parts and/or components can be stored by being suspended from holders that are part of the movable section or are attached to the spatial structure. A combination of holders and foldable textile partitions is also possible, whereby the space in the central zone of the vertical storage system must allow the movable section to be moved. This can be achieved by the foldable nature of the partitions or by emptying the holders.

The present invention is functional in an arrangement where the movable section is moved into the central zone from above downwards, i.e. from a height which may otherwise be inaccessible. The invention also allows for the opposite direction of use where the movable section is moved into the central zone from below upwards, i.e. from a position where the section would be accessible but would require the operating personnel to bend or kneel. Finally, an advantageous arrangement is also possible where one vertical storage system has two movable sections. The first movable section is located in the upper zone and is adapted to be lowered down into the central zone and the second movable section is located in the lower zone and is adapted to be moved up into the central zone. This achieves a state where essentially all parts or components are loaded or removed in the optimal central zone. For this purpose, the storage space of the central zone must be foldable or deformable, or storable, which is easily achieved by the textile nature of the compartments. In the standard version, however, all compartments of the compartment tray will be made of textile, as this is advantageous for other reasons, especially for economical and efficient storage.

The elastic push element, especially in the form of a pneumatic strut, is preferably connected to the movable section via a short boom that extends downwards from the peripheral frame. The boom may preferably include multiple holes or multiple connection pins for connecting the pneumatic strut, whereby the geometry of the push force can be adjusted. In the event that the upper part of the movable section is made of a rigid material, the elastic push element may also be connected directly to the side wall of the movable section. The use of a boom provides freedom with the use of an insert that can be replaced as needed. At the opposite end, the elastic push element is connected to the spatial structure, preferably by means of an arm that extends horizontally from the upright to the spatial structure. The arm may also include a group of multiple holes or multiple connection pins for possibly changing the geometry of the action of the elastic push element. The boom and/or arm may be permanently welded or may be detachably attached to the peripheral frame or the spatial structure so that they can be replaced by a boom and/or arm with a different geometry of the connection elements. If a boom is not used for the second connection point, the elastic push element shall be connected directly to the peripheral frame.

The pneumatic strut in one aspect of the invention comprises a cylindrical outer body, inside of which a piston with a piston rod is slidably guided. The piston is pressed by compressed gas, preferably nitrogen, the amount and pressure of which are set during manufacture to achieve the desired push force at a given piston diameter. The piston is sealed by a seal against the inner surface of the cylinder. The piston rod is sealed by a sliding guide, a seal and a plug. The relatively large frictional resistances of the seals and the plug create the damping necessary for smooth and slow movement of the piston rod.

To increase the safety during handling, the movable section can be secured in the extreme position, in particular in the upper position, by means of a mechanical safety device. This prevents, for example, unwanted vertical movement of the movable section during transport, for example when a truck with the vertical storage system drives over an uneven terrain, when the dynamic weight of the movable section can increase above the size of the vertical component of the elastic push element. In one preferred embodiment, the safety device includes a flat hook which is pivotally connected to the spatial structure and which secures the movable section against the stop in the extreme position. The hook can be pressed into the closed position by a spring. The hook can act directly on the edge of the peripheral frame or can act on a peg that extends laterally from the peripheral frame of the movable section. The hook may have a leading edge for tilting it into the open position when the movable section is moved to the extreme position so that after the movable section has completely run out, the hook automatically engages and thus secures the extreme position of the movable section. After the movable section is raised to the extreme upper position, the hook or several hooks automatically lock, thereby providing additional support, reducing the load on the elastic push elements, in particular the pneumatic struts, and preventing the movable section from lowering spontaneously during handling and transport of the vertical storage system.

A lever or a draw rod or a similar control element can be used to unlock the hook. A design where a control cable with a force arm acting against the moment from the spring is connected to the hook has proven to be advantageous. The control cable is guided and tensioned vertically along the upright of the spatial structure. The tension in the control cable is suitably created by a spring, by which the hook is guided to the closed position. The operator deflects, pulls the control cable by moving it in a horizontal plane, when even with a small force, the deflection or stretching of the tensioned control cable occurs and the hook is rotated to the open position. The control cable guided in this way is available to the operator at any height of its guidance. After pulling the control cable, the hook is released against its spring, which unlocks the movable section and enables its safe lowering or lifting to the desired position. To check the locking, the mechanism may include a colored indicator of the status of the lock, so that the operator has sufficient control over the correct locking of the movable section. It is advisable if the lock is at the upper and lower extreme positions of the movable section.

The spatial structure of the vertical storage device may consist of a frame made of steel, with the vertical storage device having a front and rear side and two lateral sides. The groundplan of the vertical storage system may be rectangular or square. In the corners of the spatial structure there are uprights that transfer the weight from all segments with compartments. Preferably, the spatial structure will be welded from closed profiles, with the side walls having a frame character with the horizontal crossbars. The front wall has a horizontal crossbar only at the top, where it connects the corners of the side walls and at the bottom within the base frame. The front wall usually does not have other crossbars that would block access to the compartments. The rear wall may have a similar design to the front wall if access is to be allowed from the rear, but access from only the front wall is usually sufficient, and in such a case the rear wall may have additional crossbars, stiffeners, or ventilation elements, and the like. The crossbars on the side walls are suitable for holding sliding guides which can be screwed to the crossbars. In another embodiment, vertical rails are attached to the crossbars (for example, welded), to which the sliding guides are screwed. The sliding guides are located on the side walls and possibly also on the rear wall. The peripheral frame of the movable section may have fixed vertical supports through which the sliding guides are connected. The length of the supports corresponds to the length of the movable part of the sliding guide. Four parallel supports ensure resistance against crossing of the movable partition under asymmetrically acting forces.

The movable section in a preferred embodiment has a metal peripheral frame in the upper part, in which poles are inserted transversely or longitudinally. The insert is suspended on the poles so that the poles pass through sleeves sewn from the textile material of the insert or the poles pass through holes in the textile of the insert. The hole in the textile can be reinforced by pressing a sheet metal eyelet. The number of supporting sleeves or the number of supporting holes depends on the size and

In order to achieve easy replacement of textile inserts, the poles can be inserted into the peripheral frame in a way that allows them to be removed and inserted without the use of tools. Since the peripheral frame is usually made of closed or semi-closed profiles, the inner opening for the pole in the profile can be made in such a way that its lower edge is lower than the lower edge of the opposite opening on the outer wall of the perimeter frame profile. In this case, both openings, i.e. on the inner wall and on the outer wall of the perimeter frame profile, allow the pole to be inserted horizontally with the clearance necessary for manual insertion. At the same time, the length of the pole is shorter than the distance between the outer walls of the peripheral frame profiles. After the pole is inserted into the opposite openings of the peripheral frame, the pole will drop to the lower edge of the openings on the inner walls of the profile and the lower edge of the opening on the outer wall of the peripheral frame profile prevents the pole from being pushed out. To extend the pole, it is therefore necessary to lift it, which will not happen accidentally or undesirably, since the pole is pulled downwards by gravity. If the pole has a circular cross-section, the opening on the outer wall of the profile can be circular and the opening on the inner wall will be circularly extended downwards. The pole is secured against extension by its own weight and the weight of the insert with stored parts or components. After lifting the end of the pole, the end of the pole can also be pushed through the opening on the outer wall of the peripheral frame profile and the pole can be completely extended from the peripheral frame.

On two opposite sides in one of the typically advantageous aspects of the invention, the peripheral frame is attached to a pair of sliding guides, whereby the movable section is mounted in a total of four parallel vertically oriented sliding guides near the posts of the spatial structure. It is possible to use several types of sliding guides, the choice depends on the required course length and the load rate. It is preferable to use a ball or roller linear guide, which has low friction, high accuracy and load capacity. Such sliding guides are commercially available in a wide range of dimensions and load capacity and ensure precise guidance without jamming and jamming of the movable section, while having a long service life and a high number of use cycles. Another option is to use a shear sliding guide, which represents a cheaper alternative. In another aspect, the invention uses sliding guides with a damped and/or locked stop. Such slides, drawer rails are commonly used in furniture, but have a horizontal orientation. When used in the present invention, the slides, drawer rails have a vertical orientation. A cushioned stop and/or an arrest are advantageously used for the upper position of the movable section. Slides, drawer rails are commercially available not only for furniture use but also for industrial applications with a load capacity of over 100 kg.

The spatial structure of the vertical storage system can be made by welding steel profiles in accordance with the prior art, with wheels with brakes in the bottom four corners, which allow easy movement and easy handling of the vertical storage system as well as its firm locking in place. For safety reasons, the bottom part of the vertical storage system can be sheet metal to prevent the wheels from running over objects on the floor, which could lead to overturning. The sheet metal has cutouts at the wheels to enable the brakes to be operated. The vertical storage system in one of the other embodiments can have a tow bar for engagement when pulling. In another embodiment, the vertical storage system can be prepared for an automated transport system with robotic towing carts. The vertical storage system can have a guide cross in the bottom base and an opening in the plate for connection to a means of transport.

The advantage of the present invention is a simple and space-efficient design, which with a small number of moving parts provides ergonomic access to parts and components stored in a movable section, which can be positioned in height to the central zone of the vertical storage system. Thanks to this, parts and components can be stored and/or transported at a greater usable height of the vertical storage system space. The elements used in the technical solution are commercially available in high quality and in a wide range of required properties. The production and service of the vertical storage system is simple.

### Description of drawings

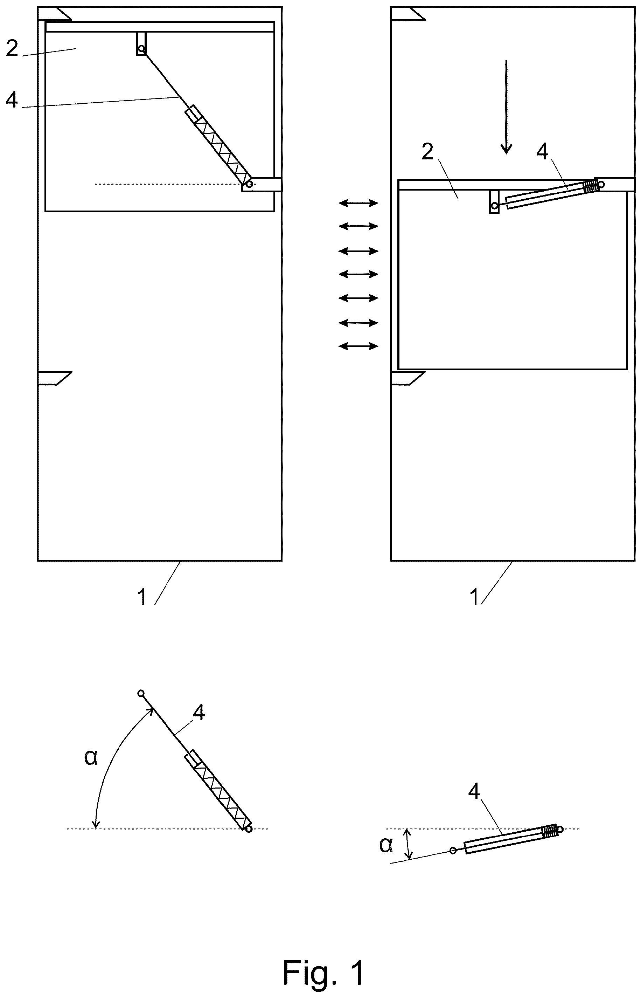

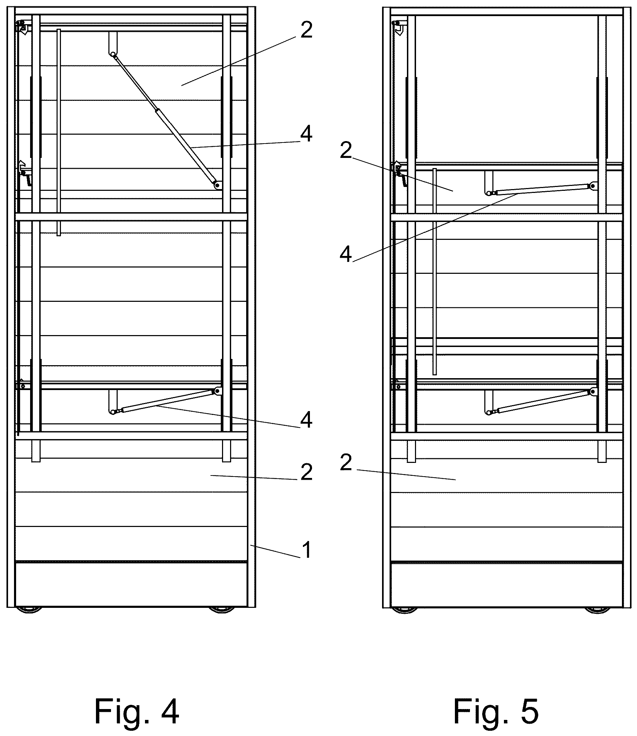

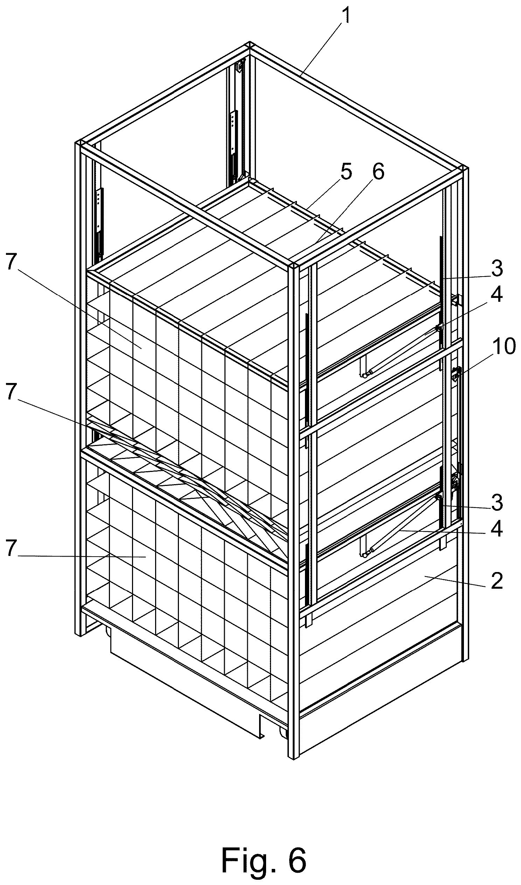

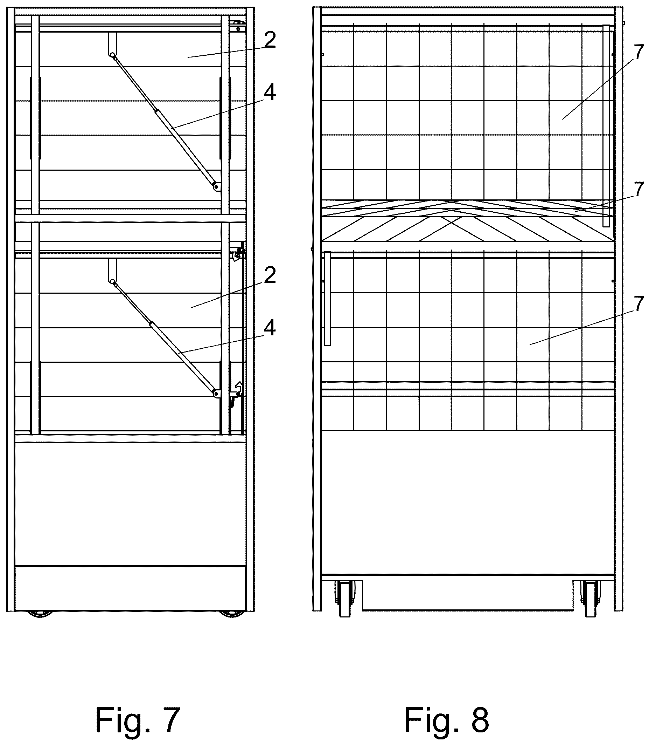

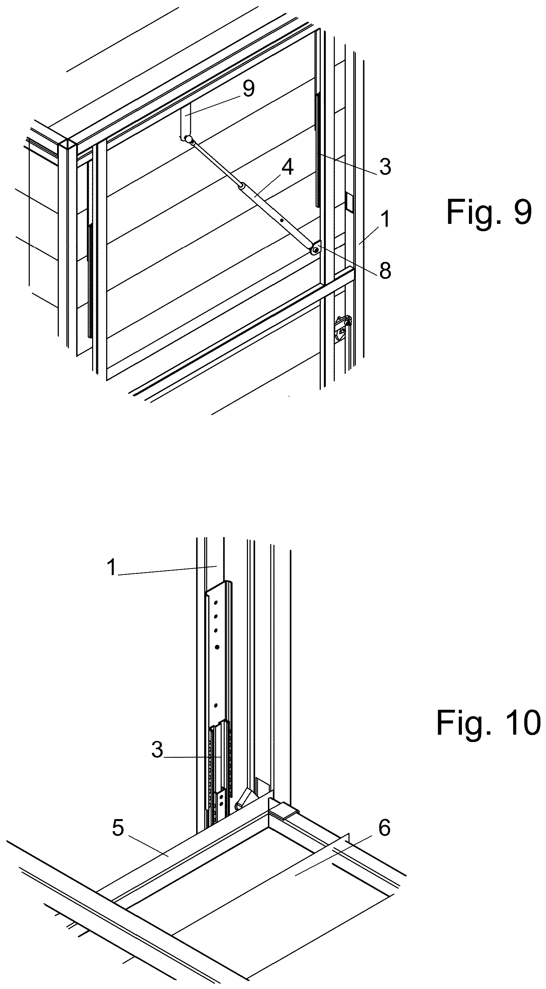

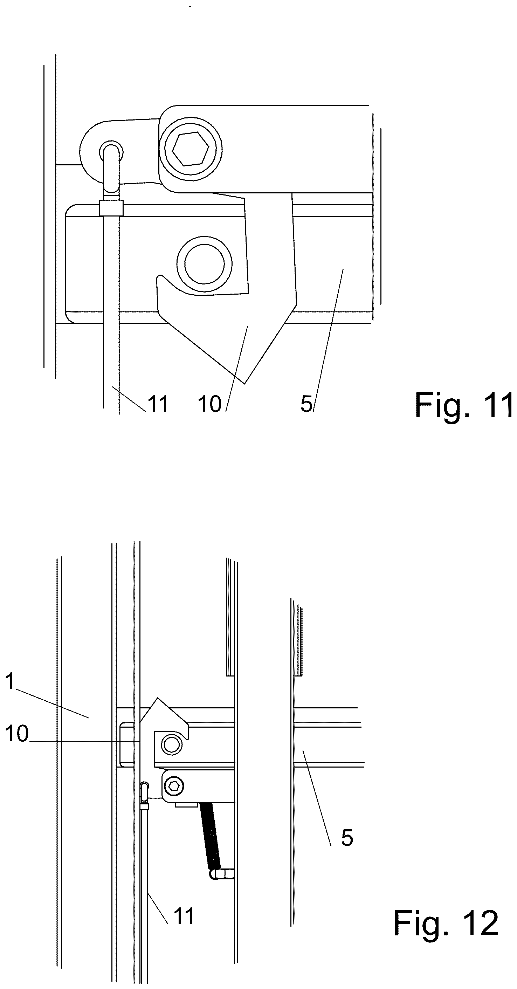

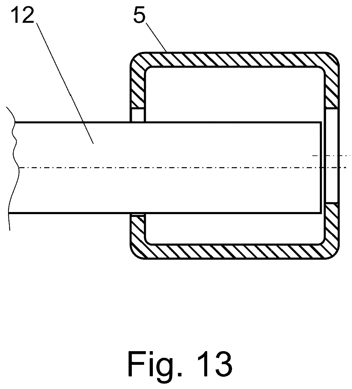

The invention is further disclosed by means of figures 1 to 14. The relative dimensions of the vertical storage system, the number of segments and the shape of the compartments within the display of the inserts, as well as the mutual ratio of the sizes of the displayed elements is only illustrative and cannot be interpreted as limiting the scope of protection.
Figure 1 shows the kinematic diagram of the movement of the movable section between the upper (left) and lower positions (right). The dashed line in the left figure shows the axis of the elastic push element in the dead position. Figure 1 shows a view of the side wall of the vertical storage system. The horizontal arrows indicate the insertion and removal of compartments, the vertical arrow shows the movement of the movable section. The angle of inclination α between the axis of the elastic push element and the horizontal plane is shown in the lower part of the figure.
Figure 2 shows a kinematic diagram of a vertical storage system with two movable sections. On the left is the position with fully loaded compartments, in the middle is the position where the upper movable section moves to the central zone, where the empty compartments are stacked on top of each other. On the right is the position where the lower movable section moves to the central zone, with the upper movable section in the upper position.
Figure 3 shows a vertical storage system with movable sections in a spatial view, the upper section is in the upper position, the compartments in the central zone are available for loading or unloading, and the lower movable section is in its lower position.
Figure 4 shows a side view of the vertical storage system, where the upper movable section is in its upper position and the lower movable section is in its lower position.
Figure 5 is a side view of the vertical storage system of Figure 4 with the upper movable section in the lower position with the lower compartments stacked on top of each other, and the lower movable section in its lower position.
Figure 6 shows a vertical storage system with movable sections in a spatial view, with the upper movable section in the lower position, the compartments from the central zone stacked on top of each other, and the lower movable section in its lower position.
Figure 7 is a side view of the vertical storage system, where the upper movable section is in the upper position, the compartments from the central zone are stacked on top of each other, and the lower section is in its upper position.
Figure 8 is a front view of the vertical storage system of Figure 7. The strap hanging vertically on the right side of the upper movable section and on the left side of the lower movable section is used for manipulation when pulling the movable section down. This figure shows the folding of the compartments from the original center zone.
Figure 9 is a detailed view of the elastic push element in the form of a pneumatic strut and the attachment of the pneumatic strut to the spatial structure and to the movable section. The mechanical position lock of the movable section is also shown in the lower right part.
Figure 10 is a detail view of a sliding ball guide, the sliding guide being attached to a vertical rail in a spatial structure.
Figure 11 shows the hook in the closed position, where the peg coming out of the side of the peripheral frame engages the hook. The hook blocks the upper position of the movable section. Figure 12 then shows the opposite hook, which secures the lower position of the movable section, with the control cable again engaged against the force moment of the spring.
Figure 13 shows a cross-section of a peripheral frame made of a closed thin-walled profile. The pole is in a locked position, where it is pressed by gravity against the edge of the hole in the inner wall of the profile, preventing the pole from sliding to the right through the hole in the outer wall of the profile.

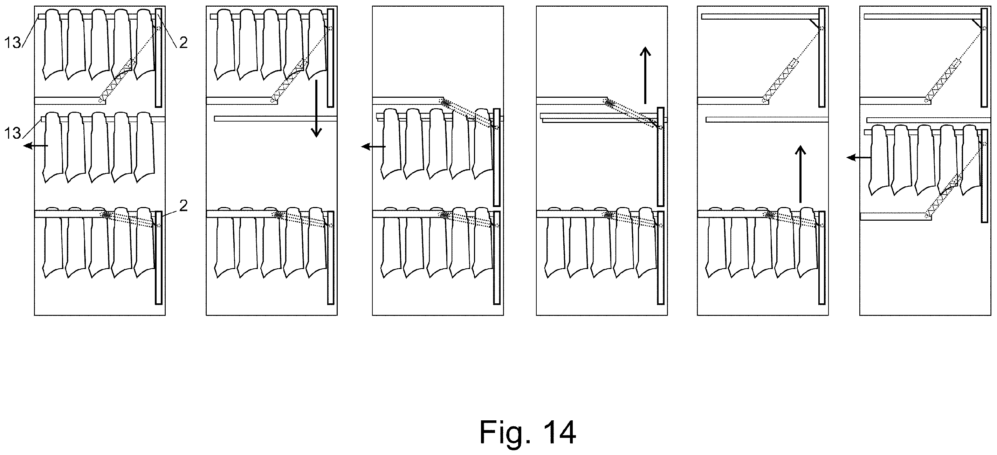

Figure 14 shows a sequence of six simplified side views of a vertical storage system with fork holders, i.e. without foldable compartments. The process of removing parts is shown sequentially from left to right. The first sequence captures a full vertical storage system, where the parts are suspended on fork holders. The horizontal arrow indicates the removal of parts from the central zone, where the fork holder is firmly connected to the spatial structure. The second sequence shows the lowering of the upper movable section into the central zone. The third sequence shows the removal of parts in the central zone from the upper movable section. The fourth sequence shows the movement of the emptied movable section to the upper position. The lower movable section is directed to the freed central zone in the fifth sequence. The sixth sequence shows the removal of parts in the central zone, where the lower movable section is located.

### Examples of realization of invention

### Example 1

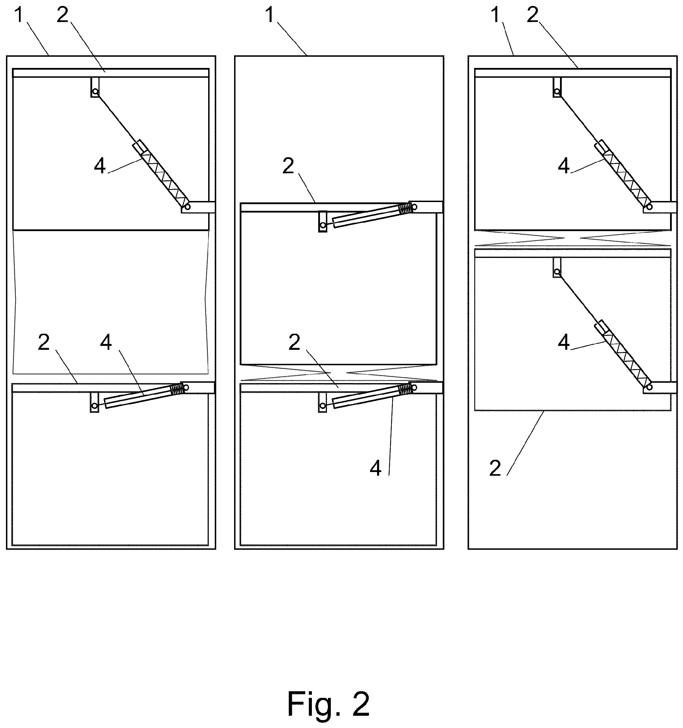

The vertical storage with movable sections according to Figures 2 to 13 has two movable sections 2. The supporting frame of the vertical storage system is formed by a spatial structure 1 with four uprights. Inside the spatial structure 1 there are compartments 7 for storing parts or components. The total height of the vertical storage system in this example exceeds 2.9 m, the depth (width of the side walls) is approximately 1.2 m and the width of the front wall intended for storing and removing parts or components is approximately 1.5 m. At the stated height, it would be very inconvenient to remove parts from the upper zone of the vertical storage system. Therefore, the upper movable section 2 is guided in sliding guides 3, which enable vertical displacement of the movable section 2 from top to bottom and vice versa between the two extreme positions.

The spatial structure 1 is welded from steel profiles, which ensure the rigidity of the entire structure 1 and form a solid and stable frame. In the two side walls of the spatial structure 1 there are pairs of vertical rails, which are intended for connecting sliding guides 3. The peripheral frame 5 of the movable section 2 is connected to the movable part of the sliding guide 3, where four parallel supports extend downwards from the peripheral frame 5, to which the sliding parts of the drawer rails are screwed.

The interior of the movable section 2 is in this example formed by an insert 6 sewn from technical textile. The insert 6 is suspended from the peripheral frame 5 by means of poles 12, whereby the poles 12 pass through sleeves sewn from the textile material of the insert 6. When the upper movable section 2 is in its upper position, the central zone, which is formed by foldable textile compartments 7, hangs at the bottom of the movable section 2. After the compartments 7 in the central zone are emptied, these compartments 7 can simply be folded on top of each other or into each other, thereby creating free space for sliding the upper movable section 2 downwards or for lifting the lower movable section 2 upwards.

The lower movable section 2 has a peripheral frame 5 and similar sliding guides 3 as the upper movable section 2. Both movable sections 2 are provided on the sides with an elastic push element 4 in the form of a pneumatic strut. Each pneumatic strut is attached by means of connecting pins to a boom 9, which extends from the peripheral frame 5, and to an arm 8, which is attached to the spatial structure 1. The elastic push elements 4 have a first connection point at a height just above the second connection point in the position when the movable section 2 is at the lower stop. In the case when the movable section 2 is in the upper position, the second connection point is above the height of the first connection point. The elastic push element 4 passes through the dead position during the movement of the movable section 2; in other positions, the elastic push element 4 pushes the movable section 2 upwards or, over a short distance, downwards.

In this example, the angle of inclination α for the upper movable section 2 ranges from 52° to -4° and the angle of inclination α for the lower movable section 2 ranges from 47° to -11°. Different ranges of the angles of inclination α are selected with regard to the different loads on the movable sections 2. To secure against displacement in the vertical direction during transport or other manipulation, a mechanical safety device is used, which has a flat hook 10 pivotally connected to the spatial structure 1. The safety device ensures the extreme position of the movable section 2 at the stop. The hook 10 is pulled into the closed position by a spring. A control cable 11 is connected against the force moment of the spring. By pulling it, the hook 10 is released and by pulling the strap, the movable section 2 is moved to the desired position.

At the bottom of the spatial structure 1, there is a wheel with a brake in each corner. The bottom of the spatial structure 1 is sheet metal. The sheet metal has cutouts near the wheels to allow the wheel brakes to be operated.

The use of two movable sections 2 will not only make the upper zone with compartments 7 accessible, but will also increase the comfort of operating the lower zone, which, thanks to the second movable section 2, will be moved to the central zone, where the operator does not have to bend down.

When changing the production program, the inserts 6 can be easily replaced according to the size of the new parts and the pneumatic struts are optionally replaced or adjusted according to the total weight of the movable section 2 together with the loaded parts. The inserts 6 can also be repaired in a conventional manner, for example by replacing the plastic reinforcement used to reinforce the bottom of the individual compartments 7. The reinforcements are, for example, inserted from the back into the chamber between two layers of textile and can be secured against spontaneous removal by means of Velcro.

### Example 2

A vertical storage system with one movable section 2 is shown in Figure 1. The interior of the vertical storage system includes a textile insert 6 with a group of compartments 7. The design of the movable section 2 is similar to that in Example 1.

### Example 3

The vertical storage system according to this example has only one elastic push element 4 for one movable section 2. The elastic push element 4 is located in the central vertical plane of the peripheral frame 5 in order to prevent the movable section 2 from tilting and crossing in the sliding guides 3. The elastic push element 4 divides the upper part of the pockets into two segments, between which it performs a swinging movement when the movable section 2 moves from the upper to the lower position and back.

This example describes a minimalist design, which is also reflected by simple sliding guides 3 connected directly to the uprights of the spatial structure 1. The spatial structure 1 has a lower part adapted for loading by a forklift. In the upper part, the spatial structure 1 has eyes for lashing when handling by a crane.

### Example 4

The vertical storage system in this example has two movable sections 2 made of a rigid material, for example, a textile reinforced with plastic plates. Only the central zone is foldable, which hangs from the bottom of the rigid part of the upper movable section 2. The empty central zone folds and deforms when the upper or lower movable section 2 is moved.

### Example 5

The central zone includes in this example only one compartment 7 for a larger part. After removing this part, the upper or lower movable section 2 can be moved into the central zone without the need to fold the compartments 7.

### Example 6

The kinematics of the elastic push element 4 in this example can be combined with any of examples 1 to 5, characterized by an inclination angle α in the upper position of 50° and an inclination angle α in the lower position of 0°.

### Example 7

The kinematics of the elastic push element 4 in this example can be combined with any of examples 1 to 5, characterized by an inclination angle α in the upper position of up to 60° and an inclination angle α in the lower position of 5°.

### Example 8

The vertical storage system is designed for towing and is equipped with a tow bar. When towing, the vertical storage system moves by means of wheels.

### Example 9

The vertical storage system has a plate attached to the bottom base with a hole for inserting the pin. The plate has a guide cross, according to which the pin is directed into the hole in an automated system of connection and movement by means of robotic carts.

### Example 10

The vertical storage system according to Figure 14 uses holders 13 for hanging or placing parts, for example for placing bumpers, which are transported to the assembly line in a car factory using the vertical storage system. In this example, the vertical storage system has three levels of holders 13. The middle holder 13 is firmly connected to the spatial structure 1, the lower and upper holders 13 are part of the lower and upper movable sections 2. The holder 13 includes two horizontal forks, the pitch of which is smaller than the internal dimension of the part. At the same time, the middle holder 13 has a smaller pitch of the forks than the upper holder 13 in order to avoid collisions when the upper movable section 2 is lowered.

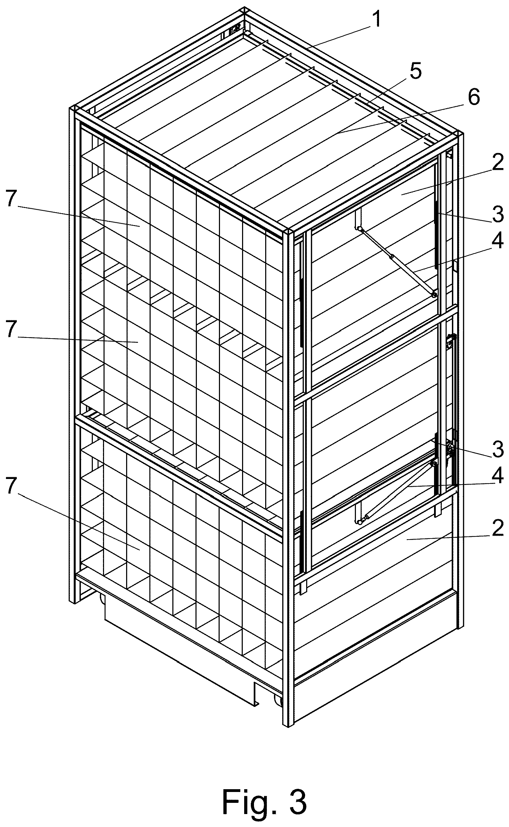

In this example, the vertical storage system does not include the foldable compartments 7, since the central zone is emptied after the parts are removed and the empty forks of the holder 13 do not take up much space in the horizontal direction. After moving the upper movable section 2 to the central zone according to the third sequence in Figure 3, the parts are suspended just above the fixed holders 13.

In another similar realization, the holders 13 of the central zone may be hinged upwards, where in the empty state they are hinged open when the lower movable section 2 moves.

### Industrial applicability

The industrial applicability is obvious. According to this invention, it is possible to industrially and repeatedly produce and use vertical storage systems intended for safe storage and transportation of objects with ergonomic control and access to a movable section, or to several movable sections.

### List of symbols

1- spatial structure
2- movable section
3- sliding guide
4- elastic push element
5 - peripheral frame
6 - insert
7 - compartment
8 - arm
9 - boom
10 - hook
11 - control cable
12 - pole
13 - holder
α - angle of inclination

## Claims

1. A vertical storage system with a movable section, where the vertical storage system includes a spatial structure (1) in which there is led at least one movable section (2) for a vertical movement between an upper and a lower position, whereby the movable section (2) is designed to carry and/or store parts or components, predominantly in compartments (7) and/or on holders (13), and the movable section (2) is connected with the spatial structure (1) by means of at least one elastic push element (4) which carries a force in its axis between a first and a second point of connection, where in the first point of connection the elastic push element (4) is connected with the spatial construction (1) and in the second point of connection the elastic push element (4) is connected with the movable section (2), **is characterized by the fact, that** the elastic push element (4) is designed to push the movable section (2) upwards if the movable section (2) is in the upper position, where the angle of inclination (α) of the axis of the elastic push element (4) from a horizontal plane in the upper position of the movable section (2) is less than 90°, preferably less than 85°, especially preferably less than 70°.

2. The vertical storage system with the movable section according to the claim 1 **is characterized by the fact, that** the elastic push element (4) is designed to push the movable section (2) downward if the movable section (2) is in the lower position.

3. The vertical storage system with the movable section according to the claim 1 or 2 **is characterized by the fact, that** the angle of inclination (α) of the elastic push element's (4) axis from the horizontal plane in the upper position of the movable section (2) is less than 65°, preferably less than 50°, and the angle of inclination (α) of the elastic push element (4) from the horizontal plane in the lower position of the movable section (2) ranges from 5° to -15°, preferably from 0°to -10°, especially preferably it is in the range up to -5°.

4. The vertical storage system with the movable section according to any of the claims 1 to 3 **is characterized by the fact, that** in the upper position of the movable section (2) the second point of connection is above a level of the first point of connection and in the lower position of the movable section (2) the second point of connection is below the level of the first point of connection.

5. The vertical storage system with the movable section according to any of the claims 1 to 4 **is characterized by the fact, that** the elastic push element (4) is in a vertical plane which is parallel to or identical with a lateral side of the spatial structure (1) and the maximum force of the elastic push element (4) or the summary maximum force of the multiple elastic push elements (4) multiplied by sin(α) for the angle of inclination (α) in the upper position is greater than a weight of the movable section (2), preferably it is greater than the weight of the movable section (2) loaded with the parts and/or components, preferably the vertical storage system includes two identical elastic push elements (4) for the single movable section (2), where the elastic push elements (4) are placed in the lateral sides of the spatial structure (1).

6. The vertical storage system with the movable section according to any of the claims 1 to 5 **is characterized by the fact, that** the elastic push element (4) is equipped by damping of a movement and/or by a setting of an output force.

7. The vertical storage system with the movable section according to any of the claims 1 to 6 **is characterized by the fact, that** two identical elastic push elements (4) are connected on one side of the spatial structure (1) in such a way that the first point of connection of the first elastic push element (4) is by one edge of the lateral side, the first point of connection of the second elastic push element (4) is by the opposite edge of the lateral side, both first points of connection are in a same height, both second points of connection are in the same height.

8. The vertical storage system with the movable section according to any of the claims 1 to 7 **is characterized by the fact, that** the elastic push element is a hydraulic strut or a pneumatic strut or a hydropneumatic strut, preferably with a pressurized nitrogen.

9. The vertical storage system with the movable section according to any of the claims 1 to 8 **is characterized by the fact, that** the pneumatic strut is connected to the spatial structure (1) through an arm and it is connected to the movable section (2) through a boom (9) or through a peripheral frame (5); preferably the arm (8) is connected to an upright of the spatial structure (1) and/or to a vertical rail which carries a sliding guide (3) and the boom (9) is preferably connected to the peripheral frame (5), especially preferably the arm (8) and/or the boom (9) have multiple openings and/or multiple pins for connected the pneumatic strut, or the arm (8) and/or the boom (9) is demountable.

10. The vertical storage system with the movable section according to any of the claims 1 to 9 **is characterized by the fact, that** it has the upper movable section (2) which in the upper position reaches to a top of the spatial structure (1), and which in the lower position reaches into a central zone of the spatial structure (1), and it has the lower movable section (2) which in the lower position reaches to a bottom of the spatial structure (1), and which in the upper position reaches to the central zone of the spatial structure (1).

11. The vertical storage system with the movable section according to any of the claims 1 to 10 **is characterized by the fact, that** the compartments (7) of the central zone are foldable and they hang on the upper movable section (2) or they hang on partitions in the spatial structure (1); preferably the compartments (7) are produced by sewing a textile or other semi-rigid flat material.

12. The vertical storage system with the movable section according to any of the claims 1 to 11 **is characterized by the fact, that** the movable section (2) has the peripheral frame (5) which is connected with the spatial structure (1) through at least one pair of vertically led sliding guides (3) and an insert (6) with a group of the compartments (7) hangs downwards from the peripheral frame (5); preferably the movable section (2) is led in four sliding guides (3) and preferably the peripheral frame (5) has vertical supports to which a moving part of the sliding guide (3) is connected.

13. The vertical storage system with the movable section according to any of the claims 1 to 12 **is characterized by the fact, that** it includes a holder (13) for hanging the part and/or the component; preferably it includes the holder (13) which is part of the movable section (2) and/or it is connected to the spatial structure (1).

14. The vertical storage system with the movable section according to any of the claims 1 to 13 **is characterized by the fact, that** it includes a mechanical safety device of the upper position of the movable section (2), preferably the mechanical safety device has a flat hook (10) which is tiltably connected to the spatial structure (1); the hook (10) is pressed into a closed position by a spring, whereby the edge of the peripheral frame (5) or a peg protruding from the peripheral frame (5) falls into the hook (10), and a control cable (11) with an arm of force acting against a moment of the spring is connected to the hook (10), and the control cable (11) is led and tensioned vertically by the upright of the spatial structure (1).

15. The vertical storage system with the movable section according to any of the claims 1 to 14 **is characterized by the fact, that** the insert (6) is hung on at least two poles (12) which are transversally or longitudinally placed in the peripheral frame (5), where the peripheral frame (5) has a profile with an outer and an inner wall, the pole (12) is placed through opposite placed openings in the peripheral frame (5), whereby the opening for the pole (12) on the inner wall of the profile has a lower edge lower than the lower edge of the opposite opening on the outer wall of the respective profile, and at the same time a length of the pole (12) is less than a distance of the outer walls of the profiles of the peripheral frame (5).
